# EUROPÄISCHE PATENTANMELDUNG

(11) **EP 1 503 257 A2**
(43) Veröffentlichungstag der Anmeldung: **02.02.2005**
(21) Anmeldenummer: 04017915.2
(22) Anmeldetag: 29.07.2004
(51) Int. Cl.: G04G 5/00

(54) **Funkuhr**

(30) Priorität: 31.07.2003 DE 10334990
(71) Anmelder: ATMEL Germany GmbH, 74072 Heilbronn (DE); C-Max Europe GmbH, D-74078 Heilbronn (DE)
(72) Erfinder: Polonio, Roland, Dipl.-Ing., 74172 Neckarsulm (DE); Sailer, Hans-Joachim, 74078 Heilbronn (DE)

(57) **Zusammenfassung**

Die Erfindung betrifft ein Verfahren zur Gewinnung der Zeitinformationen aus von einem Zeitzeichensender gesendeter Zeitzeichensignale. Erfindungsgemäß wird zur Gewinnung der Zeitinformationen pro Zeitrahmen jeweils zumindest ein Zeitbereich, der kleiner ist als die Dauer eines Zeitrahmens, auf eine Änderung der Amplitude des Zeitzeichensignals hin untersucht. Die Erfindung betrifft ferner eine Empfängeranordnung für eine Funkuhr, welche eine Zeitinformationsentnahmeeinrichtung zur Entnahme der in dem Zeitsignal enthaltenen Zeitinformation aufweist. Die Gewinnung der Zeitinformation erfolgt dabei bereits im Empfänger, wodurch der Mikroprozessor hinsichtlich der Gewinnung der Zeitinformationen entlastet wird. Die Erfindung betrifft ferner eine Funkuhr sowie eine Verwendung einer Empfängeranordnung für eine Funkuhr.

## Beschreibung

Die Erfindung betrifft ein Verfahren zur Gewinnung der Zeitinformationen aus von einem Zeitzeichensender gesendeten Zeitzeichensignalen. Die Erfindung betrifft femer eine Empfängeranordnung für eine Funkuhr, eine Funkuhr sowie eine Verwendung einer Empfängeranordnung.

Seit je her ist es ein besonderes Anliegen, den Fluss der Zeit so genau wie möglich zu messen und darzustellen. Die modeme Gesellschaft mit ihrem komplexen Wirtschaftsleben und ihren verschiedenen Kommunikationssystemen benötigt dabei eine einheitliche und zudem besonders exakte Zeitmessung. Ermöglicht wird dies mittels moderner Cäsium gesteuerter Atomuhren, die die Zeit mit sehr hoher Präzision messen. Dabei besteht aber der Bedarf, dass eben diese präzise Zeitangabe auch für andere Teilnehmer zugänglich wird.

Schon sehr früh wurde erkannt, dass Funkwellen ein geeignetes Medium für die Zeitübertragung darstellen. Trotz der Bedeutung, die die Satellitenzeitübertragung erlangt hat, spielt die Zeitverbreitung mittels einer langwelligen Funkwelle heute eine herausragende Rolle. Es sind vor allem folgende Eigenschaften der Langwelle, die diese auch zukünftig für die Zeitübertragung interessant machen: Langwellenzeitsignale haben eine sehr große Reichweite, sie dringen in Gebäude ein und sie können noch mit sehr kleinen Ferritantennen empfangen werden. Während Hindemisse, wie Bäume und Gebäude, beim Empfang hochfrequenter Satellitensignale starke Signaldämpfungen zur Folge haben, wird der Empfang von Langwellensignalen durch derartige Hindemisse nur wenig beeinträchtigt. Diese Ausbreitungseigenschaften von mit Zeitinformationen überlagerten Langwellen in Verbindung mit den heute vorhandenen Mitteln der modemen Mikroelektronik ermöglichen den Bau kompakter Funkuhren, die zum Beispiel mit Batterie oder Solarzellen betrieben werden können.

Zur Bereitstellung dieser mit Zeitinformationen überlagerten Langwellen ist ein Sender erforderlich, der die sich innerhalb der Reichweite des Senders befindenden Funkuhren mit den entsprechenden Zeitinformationen versorgt. Mit der von der Physikalisch Technischen Bundesanstalt (PTB) gesteuerten Langwellensendestation DCF-77 steht ein zuverlässiger Zeitsignal- und Normalfrequenzsender zur Verfügung. Dieser Sender wird von Atomuhren gesteuert und sendet mit einer Leistung von 50 KW auf der Frequenz 77,5 KHz - außerhalb des Empfangsbereichs normaler Radioempfänger - im Dauerbetrieb Langwellenzeitsignale nach der amtlichen Atomzeitskala MEZ. In anderen Ländem, wie zum Beispiel in Japan und in den USA, existieren ähnliche Sender, die Zeitinformationen auf einer Langwellenfrequenz im Bereich zwischen 40 und 120 KHz mittels eines Amplituden-modulierten Signals aussenden.

Diese Länder verwenden dasselbe Format für die Übertragung der Zeitinformation, der einen (Zeit-)Rahmen, der genau eine Minute lang ist umfasst. Dieser Zeitrahmen enthält Werte für die Minute, die Stunde, den Tag, den Wochentag, den Monat, das Jahr, etc. in Form von BCD-Codes (binär codierte Dezimalcodes), die mit Pulsdauermodulation bei 1 Hz pro Bit übertragen werden. Dabei ist entweder die Anstiegsflanke oder die Abfallflanke des ersten Impulses eines Rahmens genau mit 0 Sekunden synchronisiert. Eine typische Funkuhr ist so ausgebildet, dass die Zeiteinstellung durch Aufnahme der Zeitinformation eines Rahmens oder mehrerer Zeitrahmen von dem Zeitpunkt an erfolgt, zu dem das Null-Sekundensignal zuerst empfangen wurde.

Die Übertragung der Zeitinformationen erfolgt hier anhand von so genannten Zeitzeichensignalen. Die entsprechenden Sender bzw. Empfänger dieser Zeitzeichensignale werden daher nachfolgend auch als Zeitzeichensender bzw. Zeitzeichenempfänger bezeichnet. Unter einem Zeitzeichensignal soll ein Senderzeitsignal kurzer Dauer verstanden werden, dem die Aufgabe zukommt, die von einem Sender bereitgestellte Zeitreferenz zu übertragen. Es handelt sich dabei um eine Modulationsschwingung mit meist mehreren Zeitmarken, die demoduliert lediglich einen Impuls darstellen, der die ausgesandte Zeitreferenz mit einer bestimmten Unsicherheit reproduziert. Dieses Demodulationsergebnis, als Einzelimpuls, darf nicht mit einer codierten Zeitinformation verwechselt werden, die in Form eines Impulscodes den Text eines Uhrzeitwertes überträgt.

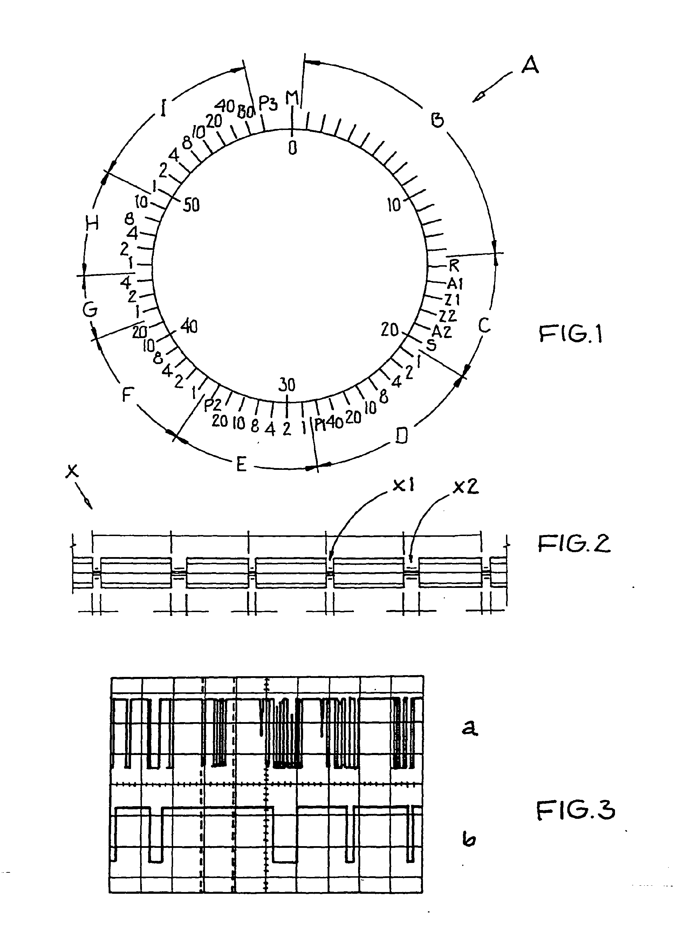

Figur 1 zeigt das mit Bezugszeichen A gezeichnete Codierungsschema der codierten Zeitinformation für den Zeitsignalsender DCF-77. Das Codierungsschema besteht vorliegend aus 59 Bits, wobei jeweils 1 Bit einer Sekunde des Rahmens entspricht. Im Verlauf einer Minute kann damit ein so genanntes Zeitzeichen-Telegramm übertragen werden, das in binär verschlüsselter Form insbesondere eine Information zu Zeit und Datum enthält. Die ersten 15 Bits B enthalten eine allgemeine Codierung, die zum Beispiel Betriebsinformationen enthalten. Die nächsten 5 Bits C enthalten allgemeine Informationen. So bezeichnet R das Antennenbit, A1 bezeichnet ein Ankündigungsbit für den Übergang der mitteleuropäischen Zeit (MEZ) zur mitteleuropäischen Sommerzeit (MESZ) und zurück, Z1, Z2 bezeichnen Zonenzeitbits, A2 bezeichnet ein Ankündigungsbit für eine Schaltsekunde und S bezeichnet ein Startbit der codierten Zeitinformationen. Ab dem 21. Bit bis zum 59. Bit werden die Zeit- und Datumsinformationen im BCD-Code übertragen, wobei die Daten jeweils für die darauf folgende Minute gelten. Dabei enthalten die Bits im Bereich D Informationen über die Minute, im Bereich E Informationen über die Stunde, im Bereich F Informationen über den Kalendertag, im Bereich G Informationen über den Tag der Woche, im Bereich H Informationen über das Monat und im Bereich I Informationen über das Kalenderjahr. Diese Informationen liegen bitweise in codierter Form vor. Jeweils am Ende der Bereiche D, E und I sind so genannte Prüf-Bits P1, P2, P3 vorgesehen. Das sechzigste Bit ist nicht belegt und dient dem Zweck, den Beginn des nächsten Rahmens anzuzeigen. M bezeichnet die Minutenmarke und damit den Beginn des Telegramms.

Die Struktur und die Bit-Belegung des in Figur 1 dargestellten Codierungsschema zur Übermittlung von Zeitzeichensignalen ist allgemein bekannt und beispielsweise in einem Artikel von Peter Hetzel, "Zeitinformation und Normalfrequenz", Telekom Praxis, Band 1, 1993 beschrieben.

Die Übertragung der Zeitzeicheninformation erfolgt Amplituden-moduliert mit den einzelnen Sekundenmarken. Die Modulation besteht aus einer Absenkung X1, X2 oder Anhebung des Trägersignals X zu Beginn jeder Sekunde, wobei zu Beginn jeder Sekunde - mit Ausnahme der neunundfünfzigsten Sekunde jeder Minute - im Falle eines vom DCF-77 Sender ausgesandten Zeitzeichensignals - die Trägeramplitude für die Dauer von 0,1 Sekunden X1 oder für die Dauer von 0,2 Sekunden X2 auf etwa 25% der Amplitude abgesenkt wird. Diese Absenkungen unterschiedlicher Dauer definieren jeweils Sekundenmarken bzw. Datenbits. Diese unterschiedliche Dauer der Sekundenmarken dient der binären Codierung von Uhrzeit und Datum, wobei Sekundenmarken mit einer Dauer von 0,1 Sekunden X1 der binären "0" und solche mit einer Dauer von 0,2 Sekunden X2 der binären "1" entsprechen. Durch das Fehlen der sechzigsten Sekundenmarke wird die nächstfolgende Minutenmarke angekündigt. In Kombination mit der jeweiligen Sekunde ist dann eine Auswertung der vom Zeitzeichensender gesendeten Zeitinformation möglich. Figur 2 zeigt anhand eines Beispiels einen Ausschnitt eines solchen Amplituden-modulierten Zeitzeichensignals, bei dem die Codierung durch eine Absenkung des HF-Signals mit unterschiedlicher Impulslänge erfolgt.

Herkömmliche Zeitzeichenempfänger, wie sie beispielsweise in der deutschen Patentschrift DE 35 16 810 C2 beschrieben sind, empfangen das von dem Zeitzeichensender ausgestrahlte Amplituden-modulierte Zeitzeichensignal und geben es wieder demoduliert als unterschiedlich lange Impulse aus. Dies geschieht in Echtzeit, das heißt pro Sekunde wird ein unterschiedlich langer Impuls am Ausgang entsprechend dem idealisierten Zeitzeichensignal gemäß Figur 2 erzeugt. Die Zeitinformation ist dabei durch die unterschiedlich langen Impulse des Trägers codiert vorhanden. Von dem Zeitzeichenempfänger werden diese Impulse unterschiedlicher Länge einem nachgeschalteten Mikrocontroller zugeführt. Der Mikrocontroller wertet diese Impulse aus und stellt fest, ob entsprechend der Länge dieses Impulses dem jeweiligen Impuls ein Bitwert "1" oder "0" zugewiesen wird. Dies geschieht, indem zunächst der Sekundenbeginn eines jeweiligen Zeitrahmens des Zeitzeichensignals bestimmt wird. Ist dieser Sekundenbeginn bekannt, kann dann aus der ermittelten Dauer des Impulses jeweils der Bitwert "1" oder "0" ermittelt werden. Der Mikrocontroller nimmt in der Folge nun alle 59 Bits einer Minute auf und stellt anhand der Bitcodierungen eines jeweiligen Sekundenimpulses fest, welche genaue Zeit und welches genaue Datum vorliegen. Diese Auswertung der genauen Zeit und des genauen Datums ist allerdings nur dann möglich, wenn die 59 Sekundenbits einer Minute eindeutig erkannt werden und somit jedem dieser Sekundenbits jeweils eindeutig eine "0" oder eine "1" zugeordnet werden kann.

Ein solches Verfahren zur Ermittlung des Sekundenbeginns im Signal eines Zeitzeichensenders ist beispielsweise in der deutschen Patentschrift DE 195 14 036 C2 beschrieben.

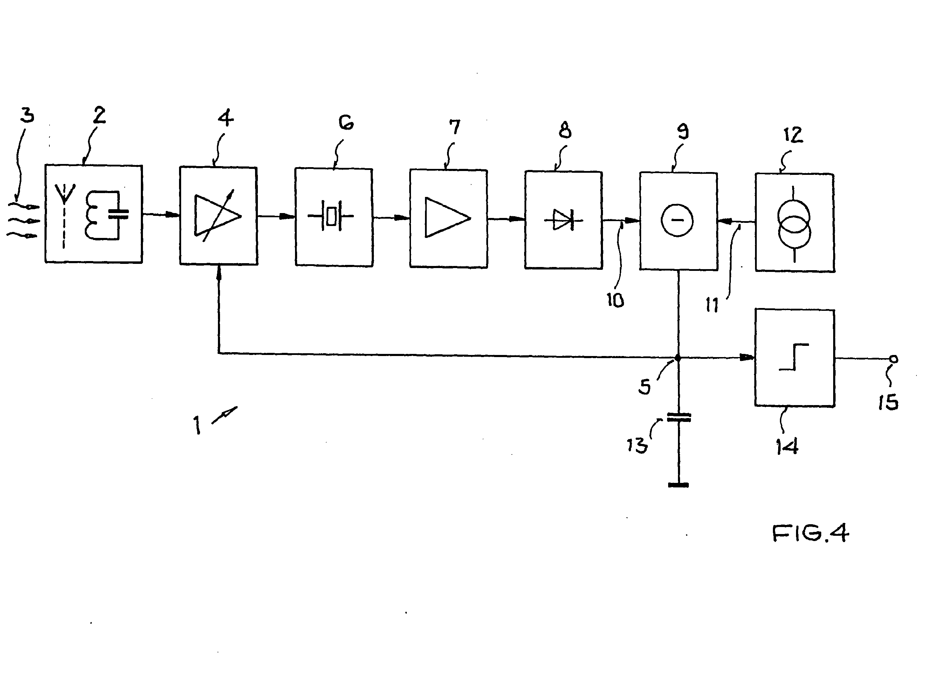

Problematisch daran ist, dass die empfangenen Zeitzeichensignale durch Störsignale überlagert werden können, die aufgrund von Störfeldem elektrischer oder elektronischer Geräte entstehen. Figur 3(a) zeigt eine Messung eines mit Störsignalen überlagerten Zeitzeichensignals, welches am Ausgang des Empfängers bereitgestellt wird. Im Vergleich dazu zeigt Figur 3(b) das entsprechende Zeitzeichensignal, wie es störungsfrei vom Zeitzeichensender übermittelt wird. Je nach Art und Umfang dieser Störsignale kann es zu einer Störung des Empfangs der Zeitzeichensignale kommen. In diesem Falle muss aber das Zeitzeichen so lange gesendet und empfangen werden, bis eine Minute lang ein korrekter Empfang von Zeitzeichensignalen möglich war, so dass die 59 Sekundenbits zur Bestimmung der korrekten Zeit und des korrekten Datums vorliegen. Im Anschluss daran wird für eine Plausibilitätsprüfung mit einem zweiten, störungsfreien Empfang einer weiteren Minute des kompletten Zeitzeichentelegramms ein Vergleich angestellt. Bei festgestellter Übereinstimmung der beiden aufgenommenen Zeitzeichentelegramme kann die Information decodiert und als Zeitinformation umgesetzt werden.

In sehr störungsreichen Umgebungen, zum Beispiel in Großstädten, in der Nähe von Industrieanlagen in Büroräumen, in denen eine große Anzahl von Datenmonitoren und Computergeräten vorhanden sind, sind Störungen aufgrund von elektrischen und elektronischen Geräten besonders groß. Aufgrund dieses "Stömebels" ist oftmals erst nach sehr langer Zeit ein korrekter Empfang eines Zeitzeichentelegramms möglich. Dies hat zur Folge, dass der Zeitzeichenempfänger für eine entsprechend lange Zeit aktiviert sein muss. Bei Zeitzeichenempfängem mit begrenzter Energieversorgung, zum Beispiel einer Batterie oder einem Akkumulator, führt dies dazu, dass die zur Verfügung stehende Energie sehr schnell verbraucht ist.

Häufig ist ein störungsfreier Empfang auch erst in den Nachtstunden möglich. Dies bedeutet aber gleichermaßen, dass bei einem Neustart des Zeitzeichenempfängers, beispielsweise bei einem Auswechseln der Batterien, erst dann bzw. am darauf folgenden Tag eine exakte Zeit vorliegt.

### Weitere Probleme ergeben sich wie folgt:

Zur Dekodierung der Zeitzeichensignale wird in der Funkuhr ein Mikrocontroller verwendet. Der dem Zeitzeichenempfänger nachgeschaltete Mikrocontroller ist aus Kostengründen typischerweise als 4-Bit-Microcontroller ausgebildet und weist einen sehr geringen Speicher von etwa 2 kByte auf. Dieser Speicher wird zum größten Teil für das Programm des Mikrocontrollers verwendet, welches wiederum zum größten Teil der Behandlung der Störungen und unterschiedlichen Sekundenimpulse. Der Mikrocontroller ist derzeit nahezu vollständig damit beschäftigt, die empfangenen, gestörten Sekundenimpulse auszuwerten. Der Mikrocontroller steht in dieser Zeit nicht für andere Aufgaben zur Verfügung.

Insbesondere für ein entsprechend Figur 3(a) mit Störungen überlagertes Zeitzeichensignal ist ein sehr umfangreiches Wissen über das Auftreten dieser Störungen während des Empfangs notwendig. Mittels dieses Spezialwissens werden die entsprechenden Programme des Mikrocontrollers so entwickelt, dass eine ausreichend sichere Auswertung der Zeitzeichensignale auch noch in relativ störungsreicher Umgebung möglich ist. Diese hinsichtlich der Störungsbehandlung optimierten Programme bestimmen derzeit im Wesentlichen die Qualität einer Funkuhr.

Aus Speicherplatzgründen können darüber hinaus lediglich sehr kompakte Programme verwendet werden. Um dennoch eine hohe Qualität und Sicherheit bei der Auswertung der Sekundenimpulse zu ermöglichen und darüber hinaus auch eine sehr intelligente Erkennung von Störsignalen zu realisieren, werden diese Programme typischerweise in einer Assemblerprogrammiersprache abgefasst. Es ist hier ein außerordentlich hohes Know-How bei der Programmierung erforderlich, um bei den gegebenen Randbedingung die Anforderungen an die Empfangstechnik, die Störbeeinflussung und weitere hauptsächlich aus der Langwellentechnik und Analogtechnik abgeleitete Probleme zu lösen. Gleichzeitig sollen diese Programme aber auch sehr kompakt programmiert sein, so dass ein möglichst geringer Speicherplatzbedarf dafür erforderlich ist. Es existieren hier aber kaum Programmierer, die entsprechend Programme unter Einhaltung der genannten Randbedingungen programmieren können. Die Qualität solcher Programme bestimmen aber im Wesentlichen die Qualität einer Funkuhr.

Zum allgemeinen Hintergrund von Funkuhren und Empfängerschaltungen zum Empfang von Zeitzeichensignalen wird noch auf die DE 198 08 431 A1, die DE 43 19 946 A1, die DE 43 04 321 C2, die DE 42 37 112 A1 und die DE 42 33 126 A1 verwiesen. Hinsichtlich der Synchronisierung eines Zeitzeichensignals wird auf die DE 298 13 498 U1 und die DE 44 03 124 C2 verwiesen. Hinsichtlich der Informationsgewinnung und - verarbeitung von Zeitinformationen aus Zeitzeichensignalen wird auf die DE 195 14 031 C2, die DE 37 33 965 C2 und die EP 042 913 B1 verwiesen.

Der vorliegenden Erfindung liegt die Aufgabe zugrunde, den Rechenaufwand bei der Auswertung von Zeitzeichensignalen in einer Funkuhr zu reduzieren. Insbesondere soll auch eine schnellere, qualitativ verbesserte und/oder störungsunempfindlichere Auswertung ermöglicht werden. Insbesondere sollen die Programme für die Auswertung der Zeitzeichensignale möglichst hinsichtlich Ihres Speicherplatzbedarfes reduziert werden.

Erfindungsgemäß wird zumindest eine der obigen Aufgaben durch ein Verfahren mit den Merkmalen des Patentanspruchs 1, 4 und 6, durch eine Empfängeranordnung mit den Merkmalen des Patentanspruchs 23, durch eine Funkuhr mit den Merkmalen des Patentanspruchs 40 sowie durch eine Verwendung mit den Merkmalen des Patentanspruchs 42 gelöst.

Die der vorliegenden Erfindung zugrundeliegende Idee besteht darin, dass zur Dekodierung der Zeitinformation nicht die gesamte Dauer eines jeweiligen Zeitrahmens untersucht werden muss. Die vorliegende Erfindung geht dabei von der Erkenntnis aus, dass eben die codierte Zeitinformation jeweils in einem kleinen Zeitraum innerhalb eines jeweiligen Zeitrahmens vorhanden ist; im übrigen Bereich des Zeitrahmens ist keine Zeitinformationen vorhanden. Diese Zeiträume bzw. deren Dauer sind durch das Protokoll des Zeitzeichentelegramms vorgegeben und damit bekannt. Es reicht demnach vollständig aus, lediglich die Bereiche im Zeitzeichensignal zu detektieren, in denen eine solche erwartete Änderung stattfindet. Ein Änderung kann dabei sowohl eine Anhebung wie auch eine Absenkung der Amplitude des Zeitzeichensignals sein. Ganz allgemein muss daher zur Gewinnung der Zeitinformationen nur ein bestimmter Zeitbereich pro Zeitrahmen auf eine Änderung der Amplitude untersucht werden, dessen Dauer kleiner ist als die Dauer eines gesamten Zeitrahmens. Idealerweise werden jeweils nur die Bereiche unmittelbar um eine erwartete Änderung auf die Änderung hin untersucht werden. Die übrigen Bereiche eine jeweiligen Zeitrahmens können unberücksichtigt bleiben.

Je nach Genauigkeit des Verfahrens sowie der entsprechenden Empfängerkomponenten können dabei die Bereiche um eine erwartete Änderung herum beliebig klein sein. Damit lassen sich die Systemressourcen reduzieren, indem der Rechenaufwand, der insbesondere für Berechnungen von Informationen außerhalb des codierten Bereichs quasi umsonst vorgehalten wird, nunmehr eingespart werden kann.

Im Falle eines synchronisierten Zeitrahmens, dass heißt im Falle eines bekannten Beginns eines codierten Bereichs (Änderung), lässt sich das Ende des codierten Bereichs dadurch detektieren, dass lediglich ein einziger Zeitbereich um eine erwartete Änderung herum auf eine Änderung hin untersucht wird. Wird diese Änderung dort detektiert, dann kann dem codierten Bereich unmittelbar ein erster logischer Wert zugewiesen werden, ohne dass ein weiterer Zeitbereich um eine erwartete Änderung, die einem zweiten logischen Wert entspricht, auf eine Änderung der Amplitude hin untersucht wird. Wird umgekehrt im einzigen Zeitbereich keine Änderung detektiert, dann kann dem codierten Bereich unmittelbar der zweite logische Wert zugewiesen werden. Dies funktioniert natürlich nur dann, wenn mit ausreichender Sicherheit - unter Berücksichtigung von Störungen - eine Änderung detektierbar ist, die ein Datenbit bezeichnet und nicht eine Störung in der Amplitude des Zeitzeichensignals.

Zur Erhöhung der Sicherheit bei der Dekodierung der Zeitinformationen und zur Verifikation der dekodierten Daten ist es häufig zweckmäßig und vorteilhaft - insbesondere wenn die erfindungsgemäße Empfängeranordnung in störungsreicher Umgebung betrieben wird - , wenn auch der weitere Zeitbereich um eine erwartete Änderung, die einem zweiten logischen Wert entspricht, auf eine Änderung der Amplitude hin untersucht wird.

Erfindungsgemäß wird femer aus wenigstens zwei aufeinander folgenden Änderungen der Amplitude des Zeitzeichensignals ein Zeitintervall bestimmt, aus dessen Dauer der Wert des Datenbits abgeleitet wird. Insbesondere sind dabei die beiden aufeinander folgenden Änderungen innerhalb eines jeweiligen Zeitrahmens vorhanden.

Erfindungsgemäß werden lediglich der Anfang einer Amplitudenabsenkung in dem Zeitrahmen eines Zeitzeichensignals sowie dessen potentielles Ende an den bekannten Zeitmarken untersucht. Aus der sich daraus ergebenden Dauer kann dann sehr einfach das Datenbit einer jeweiligen Sekundenmarke bestimmt werden, wobei die übrigen Bereiche der Sekundenmarke und damit auch ggf. dort vorhandene Störungen unberücksichtigt bleiben. Die Gewinnung dieser Zeitinformation erfolgt bereits im Empfänger, wodurch der Mikroprozessor hinsichtlich der Gewinnung der Zeitinformationen entlastet wird.

Wesentlich bei dem erfindungsgemäßen Verfahren ist, dass der Zeitrahmen (bzw. der Sekundenimpuls) auf eine feste Zeitbasis synchronisiert ist. Basierend auf dieser bekannten Zeitbasis, die aus einer Referenzfrequenz abgeleitet wird, synchronisiert sich die erfindungsgemäße Empfängerschaltung nach einer gewissen Anzahl von empfangenen Sekundenimpulse automatisch auf den jeweiligen Beginn dieser Sekundenimpulse bzw. des Rahmens.

Dies wird erfindungsgemäß durch eine Synchronisierschaltung realisiert, welche einen Zähler aufweist. Dieser Zähler wird von dem exakten Takt der festen Zeitbasis geladen und vom jeweils empfangenen Sekundenimpuls zurückgesetzt. Ein Vergleicher vergleicht beim Eintreffen des Sekundenimpulses den Zählerinhalt mit einem festen Wert und leitet daraus Korrekturen für die Synchronisation ab. Eine Synchronisation ergibt sich dann nach einer gewissen Anzahl von empfangenen Impulsen. Dies geschieht vorteilhafterweise automatisch ohne Zutun eines Programms, wodurch sich dies sehr einfach implementieren lässt. Die Synchronisation erfolgt dabei auch unabhängig von der Impulslänge der jeweiligen empfangenen Impulse.

Im Falle einer erzielten Synchronisation der empfangenen Impulse ist der genaue Beginn einer jeweiligen Sekunde und damit die Information des Datenbits vorhanden. Anschließend muss erfindungsgemäß nur noch das jeweilige Ende der Datenimpulse detektiert werden. Da diese Datenimpulse aber typischerweise nur wenige mögliche Impulslängen (die aber bei Zeitzeichensendem unterschiedlicher Länder variieren können) aufweisen können, ist dies sehr einfach möglich. Dies geschieht in der Art, dass nach einer beispielsweise aus der bekannten Zeitbasis abgeleiteten Zeit detektiert wird, ob der Datenimpuls in einem spezifischen, für ein jeweiliges Datenbit charakteristisches Zeitfenster noch vorhanden ist oder nicht. Daraus lässt sich auf die Länge des Datenimpulses und damit auf das Datenbit selbst schließen.

Durch die Synchronisation auf den Beginn eines Sekundenimpulses und die Beschränkung der Abtastung auf senderspezifische Impulslängen werden Störimpulse, die dem eigentlichen Impuls überlagert sind, oder Störungen, die als Datenimpuls gewertet werden könnten, weitestgehend vermieden. Dadurch wird eine weitaus höhere Störfestigkeit als bei herkömmlichen Softwareauswertungen erreicht, welche keine Synchronisation auf den Sekundenbeginn durchführen, da lediglich ein Bruchteil (typischerweise 10-30% des Impulses) eines Rahmens bzw. eines Sekundenimpulses für die Auswertung von Bedeutung ist. Der restliche Teil wird typischerweise gar nicht erst berücksichtigt.

Damit ist es aber nicht mehr erforderlich, dass das Programm des Mikroprozessors aufwendige Prozeduren zur Behandlung von Störungen im Zeitzeichensignal aufweist. Es ist somit auch kein oder kaum Spezialwissen über Fehlerbehandlung und Impulsdauertoleranzen zur Auswertung des empfangenen Impulses mehr erforderlich. Diese Programme sind damit sehr viel einfacher als bisher eingesetzte Programme, so dass sich die Erstellung dieser Software einfacher und billiger gestaltet.

Da diese Datengewinnung nahezu vollständig von dem Empfänger durchgeführt wird, wird der Mikroprozessor entlastet und steht somit anderen Steuerungs- und Rechenfunktionen zur Verfügung. Aufgrund dessen kann das Programm des Mikroprozessors einfacher realisiert sein, was unmittelbar eine Einsparung des Speicherplatzbedarfs nach sich zieht. Der Mikroprozessor und damit auch die gesamte Funkuhranordnung lassen sich damit kostengünstiger herstellen.

Der Mikrocontroller weist damit auch eine geringere Leistungsaufnahme auf, so dass insbesondere bei Verwendung einer lokalen Energieversorgung die Lebensdauer dieser Energieversorgung größer ist.

Vorteilhafterweise kann zur Ermittlung des Sekundenbeginns zum Beispiel auch ein Verfahren verwendet werden, wie es in der eingangs genannten deutschen Patentschrift DE 195 14 036 C2 beschrieben ist, welche hinsichtlich dieses Verfahrens vollinhaltlich in die vorliegende Patentanmeldung miteinbezogen wird.

Vorteilhafte Ausgestaltungen und Weiterbildungen der Erfindung sind Gegenstand der weiteren Unteransprüche.

Die Erfindung wird nachfolgend anhand der in den Figuren der Zeichnung angegebenen Ausführungsbeispiele erläutert. Es zeigt dabei:
- Figur 1: das Codierungsschema (Zeitzeichentelegramm) einer von dem Zeitzeichensender DCF-77 gesendeten codierten Zeitinformation;
- Figur 2: einen Ausschnitt eines idealisierten Zeitzeichensendesignals mit 5 Sekundenimpulsen;
- Figur 3: einen Ausschnitt eines realen genannten Zeitzeichensignals am Ausgang eines Zeitzeichenempfängers (a) sowie das dazu gehörende, störungsfrei vom Zeitzeichensender gesendete Zeitzeichensignal (b);
- Figur 4: ein Blockschaltbild eines Geradeaus-Empfängers;
- Figur 5: ein Schaltbild einer integrierten Schaltung, wie sie in einer erfindungsgemäßen Empfängeranordnung gemäß Figur 4 verwendet werden kann;
- Figur 6: anhand eines Blockschaltbildes den Aufbau der Logik- und Steuereinheit aus Figur 5;
- Figur 7: anhand eines detaillierten Blockschaltbildes den Aufbau der Logikund Steuereinheit gemäß der Figuren 5 oder 6, welche Einheiten zur Synchronisation, Auswertung und Speicherung empfangener Zeitzeichensignale aufweist;
- Figur 8: einen Ausschnitt eines gesendeten Zeitzeichensignals, anhand dessen das erfindungsgemäße Verfahren zur Synchronisation auf den Signalstart eines Sekundenimpulses erläutert wird;
- Figur 9: ein Blockschaltbild einer stark vereinfacht dargestellten Funkuhr.

In allen Figuren der Zeichnung sind gleiche bzw. funktionsgleiche Elemente, Signale und Funktionen - sofem nichts anderes angegeben ist - gleich bezeichnet worden.

Figur 4 zeigt anhand eines Blockschaltbildes eine analoge Empfängeranordnung, die dazu ausgelegt ist, Zeitzeichensignale aufzunehmen. In Figur 4 ist mit Bezugszeichen 1 die Empfängerschaltung bezeichnet. Der Empfänger 1 ist hier als Geradeaus-Empfänger ausgebildet. Ein solcher Geradeaus-Empfänger 1 eignet sich besonders vorteilhaft zum Einsatz in einer Funkuhr.

Der Empfänger 1 weist empfangsseitig eine Antenne 2 auf. Die Antenne 1 ist als Rahmen- oder Ferritantenne ausgeführt und auf den nicht dargestellten Zeitzeichensender abgestimmt. Über die Antenne 2 ist der Empfänger 1 somit in der Lage vom Zeitzeichensender gesendete Zeitzeichensignale 3 aufzunehmen. Der Antenne 2 ist ein Regelverstärker 4 nachgeschaltet. Ein zweiter Eingang des Regelverstärkers 4 dient der Zuführung eines Steuersignals 5. Die Verstärkung des Regelverstärkers 4 hängt dabei exponentiell von dem Regelsignal 5 ab, wobei gewisse Abweichungen je nach Gestaltung der übrigen Funktionseinheiten zulässig sind. Dem Regelverstärker 4 ist ausgangsseitig ein Filter 6 nachgeschaltet. Über dieses vorzugsweise piezoelektrisch ausgebildete Filter 6, das ebenfalls auf die Frequenz des Zeitzeichensenders abgestimmt ist, ist der Ausgang des Regelverstärkers 4 mit dem Eingang eines Nachverstärkers 7 verbunden. Dem Nachverstärker 7 ist ein Gleichrichter 8, beispielsweise eine Diodenschaltung, nachgeschaltet. In einer diesem Gleichrichter 8 nachgeschalteten Subtrahiereinrichtung 9 wird das empfangene, geregelte, verstärkte und gleichgerichtete Zeitzeichensignal 10 von einem Signal 11, welches von einer Referenzquelle 12 erzeugt wird, subtrahiert. Dieses ausgangsseitig von der Subtrahiereinrichtung 9 erzeugte Signal wird auf einen mit einem Bezugspotenzial verbundenen Speicherkondensator 13 geleitet. Die in dem Speicherkondensator 13 gespeicherte Ladung bzw. die über dem Speicherkondensator 13 abfallende Spannung bildet dann die Regelspannung 5 zur Ansteuerung des Regelverstärkers 4.

Speicherkondensator 13 und Subtrahiereinrichtung 9 bilden zusammen einen Differenzintegrator, der die Differenz des gleichgerichteten Signals 10 und des Referenzsignals 11 über die Zeit integriert. Stimmen gleichgerichtetes Signal 10 und Referenzsignal 11 nicht miteinander überein, so ändert sich die Regelspannung 12 über dem Speicherkondensator. Dadurch verändert sich auch die Verstärkung des Regelverstärkers 4 in dem Sinne, dass die angenommene Differenz vermindert wird. Der Vorgang kommt dann zur Ruhe, wenn die Signale 10, 11 übereinstimmen.

Der Abgriff zwischen Subtrahiereinheit 9 und Speicherkondensator 13, an dem das Regelsignal 5 abgreifbar ist, ist femer mit einem Eingang einer Decodiereinheit 14 verbunden. Die Decodiereinheit 14 ermittelt aus dem Regelsignal 5 die Hüllkurve der Amplitudentastung. Dieses Hüllsignal 15 ist am Ausgang des Empfängers 1 abgreifbar und kann somit einem - in Figur 4 nicht dargestellten - Mikrocontroller zugeführt werden.

Der Aufbau und die Funktionsweise eines solchen Geradeaus-Empfängers 1 ist in der bereits eingangs genannten deutschen Patentschrift DE 35 16 810 beschrieben. Diese Druckschrift wird hinsichtlich des Aufbaus und der Funktionsweise eines Zeitsignalempfängers vollinhaltlich in die vorliegende Patentanmeldung mit einbezogen.

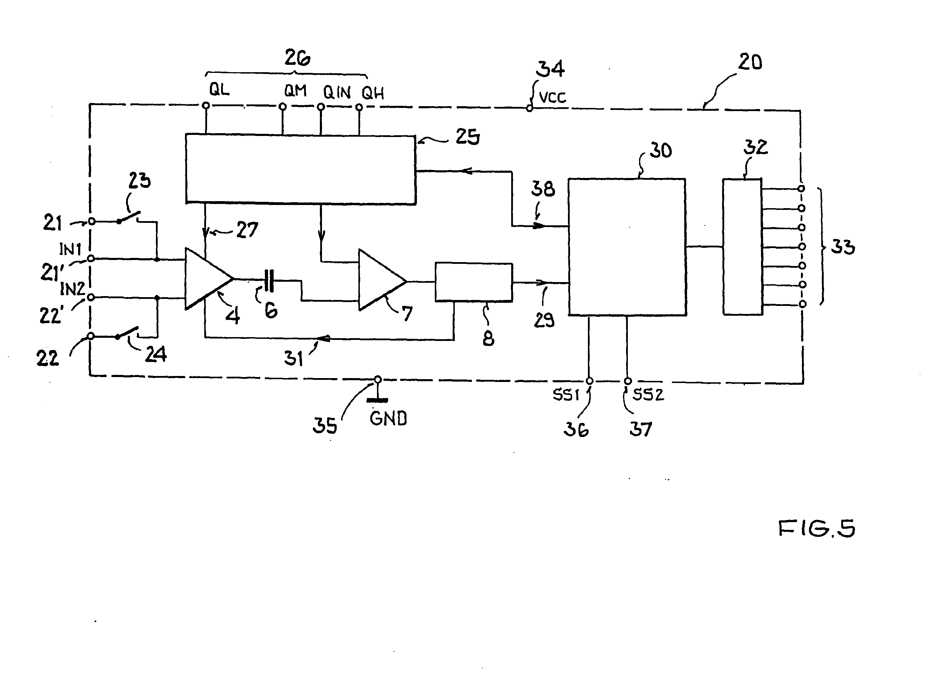

Figur 5 zeigt anhand eines detaillierten Blockschaltbildes einen Teil eines Zeitsignalempfängers. In Figur 5 ist mit Bezugszeichen 20 eine integrierte Schaltung bezeichnet, wie sie beispielsweise in einem Zeitsignalempfänger entsprechend Figur 4 Verwendung findet. Die integrierte Schaltung 20 weist zwei Eingänge 21, 22 auf, über die die integrierte Schaltung 20 mit zwei (nicht dargestellten) Antennen verbindbar ist. Durch das Bereitstellen von zwei bzw. auch mehr Antennen ist es möglich, dass der Empfänger 1 auf mehrere Zeitsignalsender abgestimmt wird. Der Regelverstärker 4 kann dabei jeweils mit einer dieser Antenneneingänge 21, 22, beispielsweise durch steuerbare Schalter 23, 24, verbunden werden. Der andere Eingang des Regelverstärker 4 ist mit Eingängen 21', 22' verbunden. In diese Eingänge ist zum Beispiel ein Referenzsignal IN1, IN2 einkoppelbar. Der Regelverstärker 4 ist ausgangsseitig mit einem Eingang des Nachverstärkers 7 verbunden, wobei dazwischen ein Kompensationselement 6, zum Beispiel ein Kondensator, ausgebildetes Filter 6 angeordnet ist. Hiermit wird es möglich, parasitäre Kapazitäten zwischen den Eingängen QL - QH zu kompensieren.

Die integrierte Schaltung 20 weist femer eine Schaltereinheit 25 auf. Die Schaltereinheit 25 weist zum Beispiel mehrere umschaltbare Filter an den Eingängen QL - QH auf, mittels der die Schaltereinheit 25 dazu ausgelegt ist, ausgangsseitig mehrere Frequenzen bereitzustellen. Diese Frequenzen lassen sich über Steuereingänge 26, 36, 37 der Schaltereinheit 25 einstellen. Über ein von der Schaltereinheit 25 bereitgestelltes Steuersignal 27 ist der Regelverstärker 4 steuerbar. Die Schaltereinheit 25 erzeugt femer ein Ausgangssignal 28, welches in einen zweiten Eingang des Nachverstärkers 7 eingekoppelt wird. Der Nachverstärker 7 steuert den nachgeschalteten Gleichrichter 8 an. Der Gleichrichter 8 erzeugt ein Regelsignal 31 (AGC-Signal = Automatic Gain Control), welches den Regelverstärker 4 ansteuert. Der Gleichrichter 8 erzeugt ausgangsseitig femer ein Ausgangssignal 29, beispielsweise ein rechteckförmiges Ausgangssignal 29 (TCO-Signal), welches einer nachgeschalteten Logik- und Steuereinheit 30 zugeführt wird.

Die Logik- und Steuereinheit 30 ist mit einer Eingabe-/Ausgabe-Einrichtung 32 (I/O-Einheit) verbunden, welche mit Eingangs-/Ausgangsanschlüssen 33 der integrierten Schaltung 20 verbunden ist. An diesen Ausgängen 33 sind u.a. die in der Logik- und Steuereinheit 30 bearbeiteten, decodierten und abgespeicherten Zeitzeichensignale abgreifbar. Ein der integrierten Schaltung 20 nachgeschalteter - in Figur 5 nicht dargestellter- Mikrocontroller kann eben diese in der Logik- und Steuereinheit 30 abgelegten und decodierten Zeitzeichensignale bei Bedarf auslesen. Über die Anschlüsse 33 ist der integrierten Schaltung 20 bzw. der Logikund Steuereinheit 30 femer ein Taktsignal zuführbar.

Zur weiteren Steuerung der Schaltereinheit 25 ist diese mit der Logik- und Steuereinheit 30 verbunden, welche die Logik- und Steuereinheit 30 mit einem Steuersignal 38 ansteuert. Die integrierte Schaltung weist femer Anschlüsse 36, 37 auf, über die die Logik- und Steuereinheit 30 mit Steuersignalen SS1, SS2 beaufschlagbar ist.

Der Aufbau und die Funktionsweise dieser Logik- und Steuereinheit 30, die unter anderem die Funktionalität der Subtrahiereinrichtung 9, des Speicherkondensators 13 und der Decodiereinrichtung 14 aus Figur 4 enthält, wird nachfolgend noch detaillierter beschrieben.

Zur Energieversorgung weist die integrierte Schaltung 20 einen ersten Versorgungsanschluss 34 sowie einen zweiten Versorgungsanschluss 35 auf. Im vorliegenden Ausführungsbeispiel weist der erste Versorgungsanschluss 34 ein erstes Versorgungspotential VCC, beispielsweise ein positives Versorgungspotenzial bzw. das Batteriepotenzial, auf, während der zweite Versorgungsanschluss 35 ein zweites Versorgungspotenzial GND, beispielsweise ein negatives Versorgungspotenzial bzw. das Potenzial der Bezugsmasse, aufweist. Die schaltungstechnische Verschaltung der Elemente der integrierten Schaltung 20 mit diesen Versorgungsanschlüssen 34, 35 ist in Figur 5 der besseren Übersicht wegen nicht näher dargestellt worden, jedoch erschließt sich diese für den Fachmann.

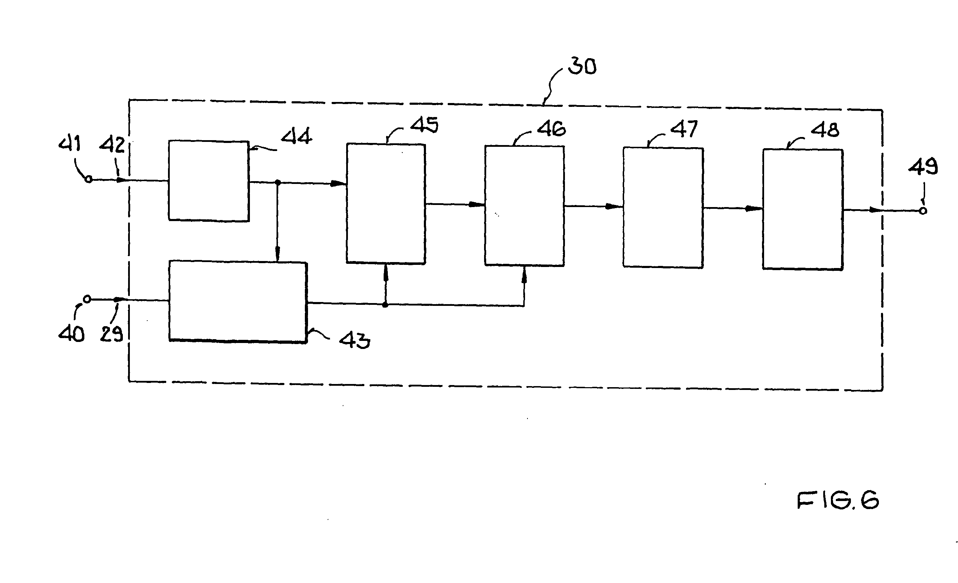

Figur 6 zeigt anhand eines Blockschaltbildes zunächst einen allgemeinen Aufbau der Logik- und Steuereinheit 30 entsprechend Figur 5.

Die Logik- und Steuereinheit 30 weist einen ersten Eingang 40 auf, über den das empfangene, verstärkte und gleichgerichtete TCO-Signal 29 einkoppelbar ist. Über einen zweiten Eingang 41 ist ein Taktsignal 42 mit einer Frequenz von beispielsweise 32 kHz, in die Logik- und Steuereinheit 30 einkoppelbar. Die Logikund Steuereinheit 30 weist eine mit dem Eingang 40 verbundene Synchronisationseinheit 43 auf. Femer ist eine mit dem Takteingang 41 verbundene Einrichtung 44 vorgesehen, die eine Zeitbasis für die weitere Signalverarbeitung bzw. Synchronisation erzeugt. Die Logik- und Steuereinheit 30 weist einen Zeitgenerator 45 auf, der der Synchronisationseinheit 43 sowie der Einrichtung 44 nachgeschaltet ist. Der Synchronisationseinheit 43 und dem Zeitgenerator 45, insbesondere Zähler oder Multivibrator, ist eine Biterkennungssteuerung 46 nachgeschaltet. Die Biterkennungssteuerung 46 weist einem empfangenen Signal abhängig von dessen Amplitude und Dauer entweder einen Wert "0" oder einen Wert "1 " zu. Der Biterkennungssteuerung 46 ist eine Speichereinheit 47 nachgeschaltet, in der die einzelnen Bitwerte abgespeichert werden. Die Logikschaltung 30 weist femer eine Ausgangsschnittstelle 48 auf, die der Speichereinrichtung 47 nachgeschaltet ist und die mit zumindest einem Datenausgang 49 der Logik- und Steuereinheit 30 verbunden ist. Über den Datenausgang 49 können die gespeicherten Werte von einer nachgeschalteten programmgesteuerten Einheit, beispielsweise einem Mikrocontroller oder Mikroprozessor, ausgelesen werden.

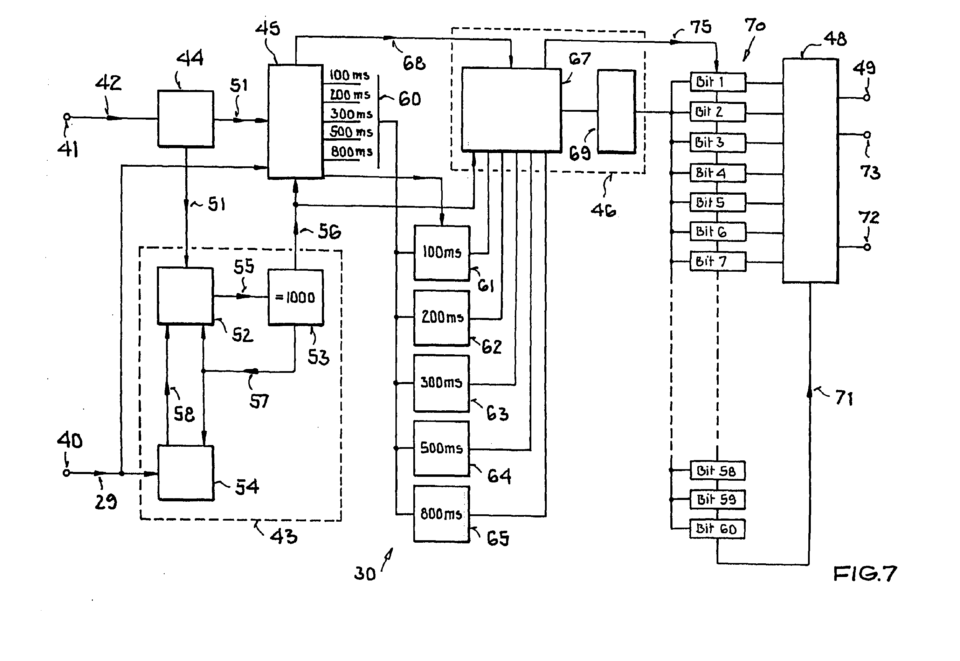

Figur 7 zeigt ein detaillierteres Blockschaltbild der Logik- und Steuereinheit 30 entsprechend Figur 6.

Über den Takteingang 41 wird der Einrichtung 44 ein internes (oder auch externes) Taktsignal 42 zugeführt. Die Aufgabe der Einrichtung 44 ist es, eine definierte Zeitbasis für den Zeitgenerator 45 sowie der Synchronisationseinheit 43 bereitzustellen. Zu diesem Zwecke weist die Einrichtung 44 typischerweise einen Eingangspuffer und einen Teiler auf, über welche aus dem eingekoppelten Taktsignal 42 ein heruntergeteiltes Taktsignal 51 mit definierter Frequenz erzeugt wird. Beispielsweise erzeugt die Einrichtung 44 aus dem Taktsignal 42 mit einer Frequenz von etwa 32 kHz ein heruntergeteiltes Taktsignal der Frequenz 1024 Hz.

Die Synchronisationseinrichtung 43 weist einen Zähler 52, eine Vergleichereinrichtung 53 und eine Steuereinrichtung 54 auf. Dem Zähler 52 wird das heruntergeteilte Taktsignal 51 zugeführt. Der Zählerstand des Zählers 52 wird dabei mit jedem Takt des Taktsignals 51 hoch gesetzt. Der Zählerstand 55 des Zählers 52 wird dabei mit einem Wert - im vorliegenden Fall ist das der Wert 1000 - der Vergleichereinrichtung 53 verglichen. Die Vergleichereinrichtung 53 steuert in Abhängigkeit von diesem Vergleich den Zeitgenerator 45 an. Die Vergleichereinrichtung 53 erzeugt femer ein Reset-Signal 57, welches dem Zähler 52 sowie der Steuereinrichtung 54 zugeführt wird. Die Steuereinrichtung 54, der eingangsseitig auch das TCO-Signal 29 zugeführt wird, erzeugt ausgangsseitig ein vom TCO-Signal abhängiges Reset-Signal 58, welches ebenfalls dem Zähler 52 zuführbar ist. Dieses Reset-Signal 58 dient dem Zweck, den Zähler 52 zurückzusetzen, wenn dieser noch nicht synchronisiert ist. Für den Fall, dass der Zähler 52 synchronisiert ist, wird dieser dann von dem Reset-Signal 57 des Vergleichers zurückgesetzt.

Dem Zeitgenerator 45 wird einerseits das verstärkte und gleichgerichtete TCO-Signal 29 zugeführt und andererseits das auf 1024 Hz heruntergeteilte Taktsignal 51. Der Zeitgenerator 45 wird zudem durch das Signal 56 der Synchronisationseinheit 43 angesteuert. Dieses Synchronisationssignal 56 zeigt den Beginn eines Sekundenimpulses an und dient somit erfindungsgemäß der Synchronisation des Zeitgenerators 45.

Der Zeitgenerator 45 weist mehrere Ausgänge 60 auf. Diesen Ausgängen 60 ist eine der Anzahl der Ausgänge 60 entsprechende Anzahl an Speichereinheiten 61 - 65 nachgeschaltet. An diesen Ausgängen 60 sind unterschiedlich lange Impulse bzw. Informationslängen über das Signal 29 abgreifbar. Für ein von dem Zeitzeichensender DCF-77 gesendetes Zeitzeichensignal sind zwar lediglich zwei Ausgänge erforderlich. Die in Figur 7 dargestellte Implementierung weist demgegenüber aber eine erweiterte Funktionalität auf, um die Verwendung eben dieser Schaltungsanordnung auch für andere Zeitzeichensender zu ermöglichen. Beispielsweise weist ein von dem Zeitzeichensender DCF-77 gesendetes Signal entweder eine Impulslänge von 100 msec oder eine Impulslänge von 200 msec auf. Allerdings existieren in anderen Ländern unterschiedlich lange Impulslängen, beispielsweise 300 msec, 500 msec oder 800 msec, wie dies zum Beispiel in den USA und Japan der Fall ist. Mittels der erfindungsgemäßen Schaltung entsprechend Figur 7 ist es nun möglich, auch diese Impulslängen zu unterscheiden.

Entsprechend der Länge dieser Zeitimpulse ergibt sich somit ein jeweiliges Signal an den Ausgängen 60, die in entsprechenden Speichereinrichtungen 61 - 65 abgelegt werden. Welche Speichereinrichtung jeweils beschrieben wird, kann beispielsweise durch einen am Ausgang 60 vorgesehenen Multiplexer, der den Speichereinrichtungen 61 - 65 vorgeschaltet ist, ausgewählt werden. Der Zeitgenerator 45 erzeugt femer ein Steuersignal 66, über welches die Speichereinheiten 61 - 65 angesteuert werden. Dieses Steuersignal 66 gibt an, ob ein Zeitimpuls entsprechender Länge definiert erkannt wurde und somit die entsprechende Speichereinrichtung 61 - 65 beschrieben werden kann.

Die Speichereinrichtungen 61 - 65 sind ausgangsseitig mit einer weiteren Vergleichereinrichtung 67 verbunden. Der Vergleichereinrichtung 67 ist somit der Inhalt einer Speichereinrichtung 61 - 65 zuführbar. Die Vergleichereinrichtung 67 vergleicht den in der jeweiligen Speichereinrichtung 61 - 65 abgelegten Wert mit dem entsprechenden Protokoll dahingehend, ob dieser Wert zulässig ist. Der Vergleichereinrichtung 67 wird femer ein weiteres, von dem Zeitgenerator 45 erzeugtes Steuersignal 68 zugeführt. Dieses Steuersignal 68 zeigt der Vergleichereinrichtung 67 einen Minutendurchgang des Zeitzeichensignals und damit den Beginn des Zeitzeichentelegramms an.

Der Vergleichereinrichtung 67 ist eine Entscheideeinheit 69 nachgeschaltet. Die Entscheideeinrichtung 69 entscheidet, ob einem Wert der Bitwert "0" oder der Bitwert "1" zugeordnet wird. Die Vergleichereinrichtung 67 und die Entscheideeinrichtung 69 bilden zusammen die Biterkennungssteuerung 46.

Der Biterkennungssteuerung 46 ist die Speichereinrichtung 47 nachgeschaltet, die zumindest sechzig Bitspeicherplätze 70 entsprechend den sechzig Sekundenbits eines Zeitzeichentelegramms aufweist. In einer Ausgestaltung kann auf den sechzigsten Bit-Speicherplatz 70 auch verzichtet werden, da dieses Bit ohnehin nicht belegt ist. In diesen Bitspeicherplätzen 70 werden in entsprechender Reihenfolge die verschiedenen Bits des gesendeten Zeitzeichentelegramms abgelegt. Die Reihenfolge wird gesteuert über ein Steuersignal 75, welches von der Biterkennungssteuerung 46 bzw. der Vergleichereinrichtung erzeugt wird und welches sicherstellt, dass die einzelnen Bits eines gesendeten Zeitzeichensignals auch in der entsprechend dem Zeitzeichentelegramm richtigen Reihenfolge in den Bitspeicherplätzen 70 abgelegt werden. Sind die sechzig Bitspeicherplätze 70 der Speichereinrichtung 47 belegt, wird dem nachgeschalteten Ausgangs-Schiebe-Register 48 das Steuersignal 71 zugeführt.

Das Ausgangs-Schiebe-Register 48 weist drei Ein- bzw. Ausgänge 72, 73, 49 auf. Am Ausgang 72 ist ein von dem Steuersignal 71 abgeleitetes Signal abgreifbar, sofem alle Bits des Schiebe-Registers belegt sind. Wird dieses Signal von einem nachgeschalteten Mikroprozessor gelesen, dann fordert dieser bei Bedarf die in den Bitspeicherplätzen 70 gespeicherten Daten-Bits über ein Anforderungssignal am Eingang 73 an. Liegt eine derartige Anforderung vor, dann werden die Dateninhalte der Bitspeicherplätze 70 im Ausgangs-Schiebe-Register 48 bereitgestellt und können nun sehr schnell seriell über den Datenausgang 49 von dem nachgeschalteten Mikroprozessor ausgelesen werden. Denkbar wäre auch ein paralleles Auslesen der anliegenden Daten.

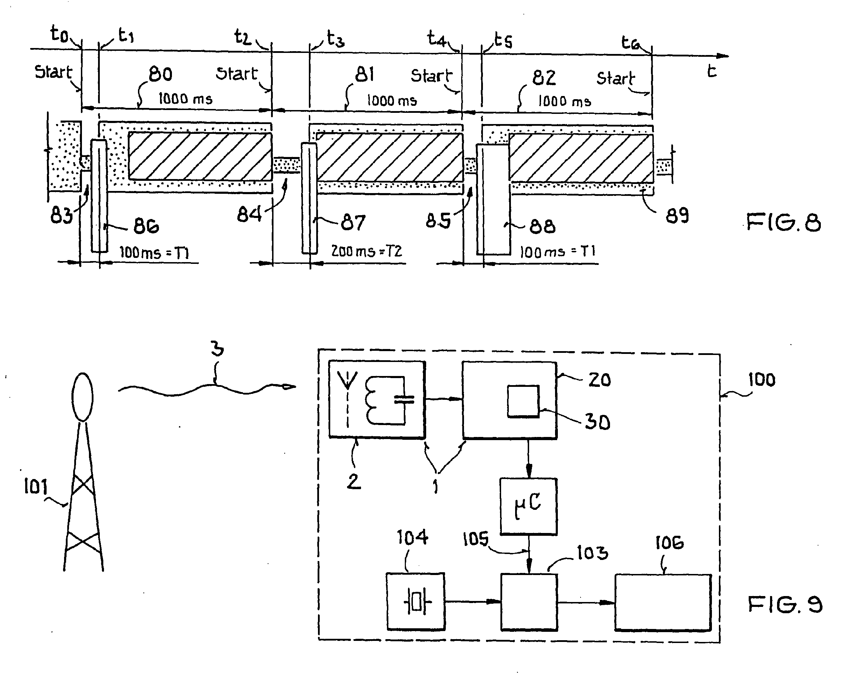

Figur 8 zeigt einen Ausschnitt an einem beispielsweise von dem Zeitzeichensender DCF-77 gesendeten Zeitzeichensignal, anhand dem das erfindungsgemäße Verfahren erläutert wird.

Im Ausführungsbeispiel in Figur 8 sind insgesamt drei vollständige Sekundenimpulse 80, 81, 82 dargestellt, die jeweils einen Zeitrahmen mit jeweils einem Datenbit 83 - 85 definieren. Der erste Sekundenimpuls 80 beginnt zum Zeitpunkt t0 und endet zum Zeitpunkt t2. Der Zeitpunkt t2 bildet gleichermaßen den Beginn des zweiten Sekundenimpulses 81, der zum Zeitpunkt t4 endet. Der dritte Sekundenimpuls 82 beginnt wiederum am Ende t4 des zweiten Sekundenimpulses 81 und endet zum Zeitpunkt t6.

Allgemein bezeichnen die Zeitpunkte t0, t2, t4, t6 jeweils einen Beginn einer Änderung des Zeitzeichensignals 89. Die Zeitpunkte t1, t3, t5 bezeichnen damit das Ende einer Änderung im Zeitzeichensignal 89.

Am Anfang eines jeden Sekundenimpulses 80 - 82 weist das gesendete Signal eine - beispielsweise auf 25% der ursprünglichen Amplitude - reduzierte Amplitude auf. Bei dem ersten Sekundenimpuls 80 ist im Zeitbereich 83 zwischen t0 und t1 eine reduzierte Amplitude des gesendeten Signals vorhanden, während im übrigen Zeitbereich zwischen t1 und t2 des Sekundenimpulses 80 die volle Amplitude aufweist. Die Bereiche mit reduzierter Amplitude 83 - 85 können im Falle eines DCF-77 Zeitzeichensignals T1 =100 msec oder T2 = 200 msec dauern, wobei ein 100 msec Impuls einer logischen "0" und ein 200 msec Impuls einer logischen "1" entspricht. Den Sekundenimpulsen 80, 82 wird somit eine logischen "0", dem Sekundenimpuls 81 eine logische "1" zugeordnet. Es wäre hier auch eine inverse Logik bzw. auch andere Impulslängen denkbar.

Nachfolgend sei das erfindungsgemäße Verfahren anhand der schematischen Darstellung eines gesendeten Zeitzeichensignals entsprechend Figur 8 und der in den Blockschaltbildem der Figuren 5 bis 7 angegebenen Anordnungen näher erläutert.

Basierend auf einer genau bekannten Referenzfrequenz synchronisiert sich die Logik- und Steuereinheit 30 nach einer gewissen Anzahl von empfangenen Zeitzeichenimpulsen automatisch auf den jeweiligen Beginn eines Sekundenimpulses. Für die Synchronisation auf den Sekundenbeginn wird dabei eine interne oder auch externe feste Zeitbasis verwendet. Grundlage dieser festen Zeitbasis kann vorteilhafter Weise die Frequenz eines in jeder elektrischen Uhrenschaltung vorhandenen Schwingquarzes sein, der eine Frequenz von exakt 32,768 kHz liefert. Somit ist keine zusätzliche Referenzfrequenz erforderlich. Die Toleranz dieses Uhrenquarzes und einer aus dessen Frequenz heruntergeteilten Referenzfrequenz ist ausreichend genug. Diese Referenzfrequenz wird mittels eines Teilers, beispielsweise mit dem Teilerwert 2⁵ = 32, auf einen gut verwendbaren Wert, beispielsweise 1024 Hz, heruntergeteilt.

Der TCO-Startimpuls setzt den Zählerstand 55 des Zählers 52 zurück. Der Zähler 52 zählt die von der Einrichtung 44 erzeugten Impulse des 1024 Hz Signals kontinuierlich hoch. Dabei entspricht jeder Impuls etwa einer Zeitdauer von 1 msec. Trifft nun ein neuer TCO Impuls 29 im Zähler 52 ein, wird in einer Vergleicherstufe 53 festgestellt, ob der Zählerstand 55 größer, kleiner oder gleich dem Wert 1000 der Vergleicherstufe 53 ist. Entspricht der Zählerstand 55 etwa dem Wert 1000, dann entspricht dies dem Abstand von einer Sekunde (= 1000 msec)und markiert somit einen neuen Sekundenbeginn. Die Vergleichereinrichtung 53 generiert daraus einen Impuls 56, welcher als Synchronisationsimpuls verwendet wird. Gleichzeitig setzt der Synchronisationsimpuls 57 den Zählerstand 55 des Zählers 52 auf Null zurück, der nun wieder getaktet von dem Signal 51 kontinuierlich hoch zählt. Bei jedem neuen Zählerstand von 1000 wird dann der Synchronisationsimpuls 56 emeut ausgelöst. Auf diese Weise wird eine über weite Bereich hohe Synchronität des empfangenen, verstärkten und gleichgerichteten Zeitzeichensignals 29 mit der internen Zählfolge 51 realisiert.

Wird der TCO-Startimpuls 29 eingekoppelt, bevor der Zähler 52 den Zählerstand 1000 erreicht hat beziehungsweise auch danach, dann wird kein Synchronisationsimpuls 56 ausgelöst. In diesem Fall wird lediglich der Zählerstand 55 wieder auf Null zurückgesetzt und emeut hoch gezählt. Dieser Vorgang erfolgt automatisch, bis eingangsseitig wieder ein Startimpuls eintrifft und zwar solange, bis der Zählerstand 55 etwa dem Wert 1000 entspricht. Es kann hier vorteilhafter Weise vorgesehen sein, dass auch bei einem geringfügig von 1000 abweichenden Zählerstand 55 dies als Synchronität interpretiert wird, woraufhin ein Synchronisationssignal 56 ausgegeben wird.

Auf diese Weise synchronisiert sich auf der Basis einer genau bekannten Referenzfrequenz (32,768 kHz-Signal) die Logik- und Steuereinheit 30 nach einer gewissen Anzahl der empfangenen Startimpulse automatisch auf den jeweiligen Beginn eines Sekundenimpulses. Die Synchronisation erfolgt dabei unabhängig von den jeweiligen Impulslängen der gesendeten Sekundenimpulse. Die Synchronität kann damit bereits nach einigen Durchläufen des Zählers 52 und somit nach einigen Sekundenimpulsen hergestellt werden. Im Falle einer so hergestellten Synchronisation ist der genaue Beginn eines Sekundenimpulses und damit die Information des jeweiligen Datenbits 83 - 85 genau bekannt. Um nun dieses Datenbit 83 - 85 auszulesen, muss nicht der gesamte Inhalt eines jeweiligen Sekundenimpulses 80 - 82 ausgelesen werden. Vielmehr reicht es vollständig aus, wenn das Ende der entsprechenden Datenbits 83 - 85 überprüft wird. Da die Datenbits 83 - 85 entsprechend der von den verschiedenen Zeitzeichensendem gesendeten Zeitzeichensignalen nicht beliebig lang sein können, sondem vielmehr eine definierte Länge aufweisen, ist das jeweilige Ende dieser Datenimpulse 83 - 85 ebenfalls genau bekannt. Im Falle des von dem deutschen Zeitzeichensender DCF-77 gesendeten Signals ist das Ende des jeweiligen Datenbits 83 - 85 entweder nach 100 msec oder nach 200 msec gemessen ab dem Beginn des Sekundenimpulses 80 - 82 zu erwarten. Das bedeutet, dass lediglich eben diese Zeitbereiche, also nach 100 msec und nach 200 msec, auf deren Amplitude hin untersucht werden müssen. Dies geschieht in der Art, dass nach der entsprechenden Zeitdauer detektiert wird, ob noch eine reduzierte Amplitude vorliegt, oder nicht. Daraus lässt sich auf Impulsdauer des Datenbits 83 - 85 und somit auf das Datenbit 83 - 85 selbst schließen. Auf diese Weise ist eine sofortige Zuweisung der Impulse 83 - 85 zu einem Bitwert möglich.

Um Zweideutigkeiten zu vermeiden, werden nicht ausschließlich die exakten Zeitpunkte, die sich nach 100 msec beziehungsweise 200 msec nach dem Beginn eines Sekundenimpulses ergeben, untersucht vielmehr ist es, allein schon aus Toleranzgründen und zur Vermeidung von Störeinflüssen, zweckmäßig, auch einen gewissen Bereich vor und nach diesen Zeitpunkten, mit einzubeziehen. Es ergeben sich damit Toleranzfenster 86 - 88 um die 100 msec bzw. 200 msec Zeitmarke. Diese Toleranzfenster 86 - 88 können geeignet an die jeweiligen Anforderungen angepasst werden, beispielsweise dahingehend, ob sich der Zeitsignalempfänger in einem störungsreichen Bereich befindet oder nicht. Ist der Zeitsignalempfänger beispielsweise in einem störungsreichen Bereich, dann sollte dieses Toleranzfenster 86 - 88 durchaus breiter gewählt werden.

Die Auslegung dieser Zeitfenster 86 - 88 sollte sich darüber hinaus auch auf die Empfindlichkeit, die durch die Referenzfrequenz und Synchronisationsschaltung bereitgestellt wird, richten.

In einer vorteilhaften Ausgestaltung werden nicht nur die jeweiligen Bereiche um die 100 msec bzw. 200 msec Zeitmarken untersucht. Vielmehr ist es meist zweckmäßig, ein durchgängiges Zeitfenster 86 - 88, welches sowohl den Zeitpunkt 100 msec als auch den Zeitpunkt 200 msec einschließt, auf einen Anstieg der Impulsamplitude hin zu untersuchen. Beispielsweise könnte in beiden Fällen ein Zeitfenster 86 - 88 zwischen 75 msec und 225 msec nach Sekundenbeginn herangezogen werden. Im obigen Beispiel findet die Auswertung somit lediglich für die Dauer von 150 msec innerhalb eines jeden Sekundenimpulses 80 - 82 statt.

Es erfolgt somit lediglich im Bereich der Zeitfenster 86 - 88 erfolgt somit eine Auswertung der Datenbits. Die Bereiche außerhalb dieser für die Bestimmung des Datenbits 83 - 85 relevanten Zeitfenster 86 - 88 werden also erfindungsgemäß nicht berücksichtigt und damit auch nicht untersucht, wodurch der Aufwand zur Gewinnung des Datenbits 83 - 85 auf ein Minimum reduziert wird. Störungen im empfangenen und untersuchten Zeitzeichensignal sind daher in diesen Bereichen unbedenklich, da sie für die Bestimmung des Datenbits 83 - 85 ohnehin nicht verwendet werden.

Die erfindungsgemäße Decodierung und Ausgabe des exakten Datums und der exakten Zeit aus dem gesendeten Zeitzeichensignal erfolgt dann wie folgt:

Mittels des letzten Bits des Zeitzeichentelegramms kann automatisch der Startimpuls der nächsten vollständigen Minute des Zeitzeichentelegramms erkannt werden. Dabei erfolgt eine Speicherung der erkannten Datenbits 83 - 85 an der dem Datentelegramm zugeordneten Speicherstelle eines entsprechenden Schieberegisters. Nachdem alle 59 Datenbits des Datentelegramms im Schieberegister abgespeichert sind, wird ein Ausgangssignal 71 gesetzt, um einer nachgeschalteten Auswerteeinheit zu signalisieren, dass die Daten nun vorliegen und abgeholt werden können. Diese Auswerteeinheit wird im Falle einer Funkuhr zumeist durch einen 4 Bit Mikrocontroller realisiert. Der Mikrocontroller fordert nun diese Daten über den Anschluss 73 an, worauf diese über den Anschluss 49 in schneller Folge zum Mikrocontroller übertragen werden. Die gesamte Datenübertragung dauert dann zum Beispiel lediglich 100 msec für alle 59 Bits einer Minute. Der Mikrocontroller ist in der Folge dann wieder frei für andere Aufgaben, beispielsweise Steuerungsaufgaben. Während dieser Zeit wird die Regelspannung des Empfängerkreises auf ihren Wert, welcher vor der Datenübertragung bestanden hat, festgehalten, um eine eventuelle Beeinflussung der Empfindlichkeit des Empfängers durch Störungen aufgrund der Datenübertragung vorzubeugen.

Durch externe Beschaltung von dafür vorgesehenen Steuerleitungen lässt sich die Steuer- und Logikschaltung 30 auf verschiedene Sendeprotokolle einstellen. Beispielsweise kann die Logik- und Steuereinheit 30 und damit die Funkuhr dazu ausgelegt sein, neben dem deutschen Sendeprotokoll DCV77 zusätzlich oder alternativ auch andere Sendeprotokolle, wie WWVB (USA), MSF (Großbritannien), JJY (Japan), BPC (China), auszuwerten und weiter zu verarbeiten.

Falls in dem Protokoll eines Zeitzeichensenders mehr als zwei Impulslängen vorhanden sind, kann in einer vorteilhaften Ausgestaltung vorgesehen sein, dass den weiteren Impulslängen eine der Stellung im Datentelegramm adäquater Bitwert zugeordnet wird. Dadurch ist eine Plausibilitätsprüfung möglich, da die verschiedenen Protokolle der Zeitzeichensender in der Steuer- und Logikeinrichtung 30 hinterlegt sind. Somit ist sehr frühzeitig, nämlich bevor der Mikrocontroller die jeweiligen Daten abholt, eine Fehlererkennung und eine daraus abgeleitete Fehlerbehebungsroutine oder Fehlerbeseitigungsroutine möglich.

Figur 9 zeigt ein Blockschaltbild einer stark vereinfacht dargestellten Funkuhr. Die mit Bezugszeichen 100 bezeichnete Funkuhr weist ein (oder auch mehrere) Antennen 2 zur Aufnahme der von dem Zeitzeichensender 101 gesendeten Zeitzeichensignale 3 auf. Der Antenne 2 ist die integrierte Schaltung 20 (entsprechend der Figuren 5), die eine Logik- und Steuereinheit 30 (entsprechend den Figuren 6 und 7) aufweist, nachgeschaltet. Antenne 2 und integrierte Schaltung 20 bilden zusammen den Empfänger 1. Den Ausgängen des Empfängers ist eine programmgesteuerte Einheit 102, zum Beispiel ein Mikrocontroller oder Mikroprozessor, nachgeschaltet. Der Mikrokontroller 102 nimmt die von dem Empfänger erzeugten Datenbits auf, errechnet daraus eine exakte Uhrzeit und ein exaktes Datum und erzeugt daraus ein Signal 105 für Uhrzeit und Datum. Die Funkuhr 100 weist femer eine elektronische Uhr 103, deren Uhrzeit anhand eines Uhrenquarzes 104 gesteuert wird, auf. Die elektronische Uhr 103 ist mit einer Anzeige 106, zum Beispiel einem Display, verbunden, über welches die Uhrzeit angezeigt wird. Der Uhr 103 wird nun auch die Signale 105 zugeführt, woraufhin die Uhr 103 das angezeigte Datum bzw. die Zeit entsprechend korrigiert.

Obwohl die vorliegende Erfindung vorstehend anhand bevorzugter Ausführungsbeispiele beschrieben wurde, ist sie darauf nicht beschränkt, sondem auf vielfältige Art und Weise modifizierbar.

So sei die Erfindung nicht notwendigerweise auf Empfängerschaltungen beziehungsweise Funkuhren zum Empfang eines von dem Zeitzeichensender DCF-77 gesendeten Zeitzeichensignals beschränkt, sondem die Erfindung lässt sich selbstverständlich auch bei beliebig anderen Zeitzeichensendem vorteilhaft einsetzen.

Auch ist für die programmgesteuerte Einheit nicht notwendiger Weise ein Mikrocontroller erforderlich. Vielmehr kann die Funktionalität dieses Mikrocontrollers auch durch eine geeignete andere Schaltung, beispielsweise einen Mikroprozessor, einen digitalen Signalprozessor (DSP), ein Fuzzy-Controller, eine festverdrahtete oder programmierbare Logikschaltung, beispielsweise eine FPGA-Schaltung, eine PLD-Schaltung oder dergleichen, ersetzt werden.

Insbesondere sei die Erfindung selbstverständlich nicht auf die vorstehenden Zahlenangaben beschränkt, die lediglich beispielhaft angegeben wurden. Die Erfindung lässt sich vielmehr im Rahmen des fachmännischen Handelns und Wissens in beliebiger Weise abändem.

Es versteht sich, dass auch die angegebenen konkreten schaltungstechnischen Varianten lediglich mögliche Ausführungsbeispiele darstellen, die sich sehr einfach durch Austauschen einfacher Bauelemente oder Funktionseinheiten verändem lassen, ohne dass von der grundsätzlichen Funktion des erfindungsgemäßen Empfängers, insbesondere dabei die Synchronisationseinrichtung, Zeitgenerator und Speichereinrichtung und damit vom Gegenstand der vorliegenden Erfindung abgewichen wird.

Unter Funkuhren sollen darüber hinaus auch solche Uhren verstanden werden, bei denen die Übermittlung des Zeitzeichensignals drahtgebunden erfolgt, beispielsweise wie bei Uhrenanlagen üblich, die jedoch einen wie beschriebenen Aufbau aufweisen.

In den vorstehenden Ausführungsbeispielen wurde die Codierung jeweils durch eine Absenkung des Trägersignals zu Beginn eines Zeitrahmens realisiert. Es versteht sich von selbst, dass diese Codierung selbstverständlich auch durch eine Anhebung oder allgemein durch eine Änderung der Amplitude des Trägersignals realisiert werden kann. Gleichermaßen wurde in den vorstehenden Ausführungsbeispielen jeweils der Beginn dieser Änderung der Zeitzeichensignalamplitude detektiert. Anhand dieses Beginns konnte erfindungsgemäß auf das jeweilige Ende, abhängig von der jeweiligen Codierung, geschlossen werden. Es versteht sich, dass dies lediglich beispielhaft dargelegt ist, da in gleicher Weise auch von einem Ende ausgegangen werden kann. In diesem Falle könnte dann auf den Beginn der Änderung der Trägersignalamplitude zurückgerechnet werden, ohne vom grundsätzlichen Prinzip der Erfindung abzuweichen. Wenngleich das erfindungsgemäße Verfahren sehr viel vorteilhafter ist, wenn der Beginn einer Änderung festgestellt wird und ausgehend davon auch der zu untersuchende Zeitbereich für das Ende festgelegt wird, wäre im umgekehrten Falle lediglich ein schaltungstechnischer Zusatzaufwand, beispielsweise ein einen Pufferspeicher, erforderlich, wenn vom Ende zurückgerechnet würde.

### Bezugszeichenliste

- 1: Empfänger, Empfängerschaltung
- 2: (Ferrit-)Antenne
- 3: Zeitzeichensignale
- 4: Regelverstärker
- 5: Regelsignal, Regelspannung
- 6: (piezoelektrisches) Filter, Kondensator
- 7: Nachverstärker
- 8: Gleichrichter
- 9: Subtrahiereinheit
- 10: gleichgerichtetes, verstärktes Signal
- 11: Referenzsignal
- 12: Referenzquelle
- 13: Speicherkondensator
- 14: Decodiereinrichtung
- 15: Ausgang des Empfängers
- 20: integrierte Schaltung
- 21, 22: Eingänge, Antenneneingänge
- 21', 22': Eingänge, Referenzeingänge
- 23, 24: steuerbare Schalter
- 25: Schaltereinheit, umschaltbares Filter
- 26: Steuereingänge
- 27, 28: Steuersignale
- 29: gleichgerichtetes, verstärktes Zeitzeichensignal
- 30: Logik- und Steuereinheit
- 31: Regelsignal
- 32: Eingabe-/Ausgabe-Einrichtung, I/O-Einheit
- 33: Ausgänge
- 34, 35: Anschlüsse für das Versorgungspotenzial
- 36, 37: Steueranschlüsse
- 38: Steuersignal
- 40: Eingang für das Zeitzeichensignal
- 41: Eingang für das Taktsignal
- 42: Taktsignal
- 43: Synchronisationseinheit
- 44: Einrichtung zur Erzeugung einer Zeitbasis
- 45: Zeitgenerator
- 46: Biterkennungssteuerung
- 47: Speichereinrichtung
- 48: Ausgangsschnittstelle, Ausgangs-Schiebe-Register
- 49: (Daten-)Ausgang der Logik- und Steuereinheit
- 51: heruntergeteiltes Taktsignal
- 52: Zähler
- 53: Vergleichereinrichtung, Vergleicherstufe
- 54: Steuereinrichtung
- 55: Zählerstand, Zählerstandsignal
- 56: Synchronisationssignal
- 57, 58: Reset-Signale
- 60: Ausgänge
- 61 - 65: Speichereinrichtungen
- 66: Steuersignal
- 67: Vergleichereinrichtung
- 68: Steuersignal (für den Minutendurchgang)
- 69: Entscheideeinrichtung
- 70: Bitspeicherplätze
- 71: Steuersignal (für belegte Bitspeicherplätze)
- 72: (Bereit-)Ausgang
- 73: (Anforderungs-)Eingang
- 80 - 82: Sekundenimpulse, (Zeit-)Rahmen
- 83 - 85: Datenbits, Impuls mit abgesenkter Amplitude
- 86 - 88: Zeitfenster
- 89: Zeitzeichensignal
- 100: Funkuhr
- 101: Zeitzeichensender
- 102: programmgesteuerte Einheit, Mikrocontroller, Mikroprozessor
- 103: elektronische Uhr
- 104: Uhrenquarzes
- 105: Signal für exakte Uhrzeit/ Datum
- 106: Anzeige

- t0 - t6: Zeitpunkte
- T1, T2: Zeitdauer
- T3: Rahmendauer
- VCC: (positives) Versorgungspotenzial
- GND: Bezugspotenzial
- IN1, IN2: Referenzsignale
- QL, QM, QIN, QH: Steuersignale
- SS1, SS2: Steuersignale

- A: Codierungsschema
- B: allgemeine Codierungsbits
- C: allgemeine Datums- und Uhrzeitinformationen
- D: Minutenbits
- E: Stundenbits
- F: Kalendertagsbits
- G: Wochentagsbits
- H: Kalendermonatsbits
- I: Kalenderjahrbits
- M .: Minutenmarke
- R: Antennenbit
- A1: Ankündigungsbits für den Übergang von MEZ nach MESZ
- Z1, Z2: Zonenzeitbits
- A2: Ankündigungsbit für eine Schaltsekunde
- S: Startbit der codierten Zeitinformation
- P1, P2, P3: Prüfbits
- X: (Zeitzeichen-)Trägersignal
- X1, X2: Absenkungen des Trägersignals

## Patentansprüche

1. Verfahren zur Gewinnung von Zeitinformationen aus von einem Zeitzeichensender (101) gesendeten Zeitzeichensignalen (89), bei dem ein Zeitzeichensignal (89) aus einer Vielzahl von Zeitrahmen (80-82) konstanter Dauer besteht, **dadurch gekennzeichnet,**
**dass** zur Gewinnung der Zeitinformationen pro Zeitrahmen jeweils zumindest ein Zeitbereich (86, 87, 88), der kleiner ist als die Dauer eines Zeitrahmens (80-82), auf eine Änderung der Amplitude des Zeitzeichensignals (89) hin untersucht wird.

2. Verfahren nach Anspruch 1,
**dadurch gekennzeichnet,**
**dass** die Zeitinformation im Zeitzeichensignal (89) bitweise vorliegt, wobei jeweils einem Zeitrahmen (80-82) zumindest ein Datenbit (83-85) zugeordnet ist, wobei der Wert des Datenbits (83-85) durch die Dauer (T1, T2) einer Änderung der Amplitude des Zeitzeichensignals (89) bestimmt ist und wobei eine erste Dauer (T1) der Änderung der Amplitude des Zeitzeichensignals (89) einem ersten logischen Wert des Datenbits (83, 85) und eine zweite Dauer (T2) der Änderung einem zweiten logischen Wert des Datenbits (84) entspricht.

3. Verfahren nach Anspruch 2,
**gekennzeichnet durch**
die Verfahrensschritte:
- ein erster Zeitpunkt (t0, t2, t4) der Änderung wird bestimmt;
- aus dem ersten Zeitpunkt (t0, t2, t4) der Änderung sowie aus der ersten und zweiten Dauer (T1, T2) wird ein zweiter Zeitpunkt (t1, t5) bezogen auf die erste Dauer (T1) und einen dritten Zeitpunkt (t3) bezogen auf die zweite Dauer (T2) bestimmt;
- ein erster Zeitbereich (86), der um den ersten Zeitpunkt (t1, t5) angeordnet ist, wird dahingehend untersucht, ob die Amplitude des Zeitzeichensignals (89) den ursprünglichen Wert der Amplitude annimmt;
- nimmt die Amplitude im erster Zeitbereich (86) den ursprünglichen Wert an, dann wird dem Datenbit (83) der erste logische Wert zugewiesen.

4. Verfahren zur Gewinnung von Zeitinformationen aus von einem Zeitzeichensender (101) gesendeter Zeitzeichensignale (89), bei dem
- ein Zeitzeichensignal (89) aus einer Vielzahl von Zeitrahmen (80-82) konstanter Dauer besteht,
- die Zeitinformation im Zeitzeichensignal (89) bitweise vorliegt, wobei jeweils einem Zeitrahmen (80-82) zumindest ein Datenbit (83-85) zugeordnet ist,
- der Wert des Datenbits (83-85) durch die Dauer (T1, T2) einer Änderung der Amplitude des Zeitzeichensignals (89) bestimmt ist,
- eine erste Dauer (T1) der Änderung der Amplitude des Zeitzeichensignals (89) einem ersten logischen Wert des Datenbits (83, 85) und eine zweite Dauer (T2) der Änderung einem zweiten logischen Wert des Datenbits (84) entspricht,
**dadurch gekennzeichnet,**
**dass** aus wenigstens zwei aufeinander folgenden Änderungen der Amplitude des Zeitzeichensignals (89) ein Zeitintervall bestimmt wird, wobei aus der Dauer des Zeitintervalls der Wert des Datenbits (83-85) abgeleitet wird.

5. Verfahren nach Anspruch 4,
**dadurch gekennzeichnet,**
**dass** die beiden aufeinander folgenden Änderungen innerhalb eines einzigen Zeitrahmens (80-82) angeordnet sind.

6. Verfahren zur Gewinnung von Zeitinformationen aus von einem Zeitzeichensender (101) gesendeter Zeitzeichensignale (89), bei dem
- ein Zeitzeichensignal (89) aus einer Vielzahl von Zeitrahmen (80-82) konstanter Dauer besteht,
- die Zeitinformation im Zeitzeichensignal (89) bitweise vorliegt, wobei jeweils einem Zeitrahmen (80-82) zumindest ein Datenbit (83-85) zugeordnet ist,
- der Wert des Datenbits (83-85) durch die Dauer (T1, T2) einer Änderung der Amplitude des Zeitzeichensignals (89) bestimmt ist,
- eine erste Dauer (T1) der Änderung der Amplitude des Zeitzeichensignals (89) einem ersten logischen Wert des Datenbits (83, 85) und eine zweite Dauer (T2) der Änderung einem zweiten logischen Wert des Datenbits (84) entspricht,
**gekennzeichnet durch** die Verfahrensschritte:
- ein erster Zeitpunkt (t0, t2, t4) der Änderung wird bestimmt;
- aus dem ersten Zeitpunkt (t0, t2, t4) der Änderung sowie aus der ersten und zweiten Dauer (T1, T2) wird ein zweiter Zeitpunkt (t1, t5) bezogen auf die erste Dauer (T1) und einen dritten Zeitpunkt (t3) bezogen auf die zweite Dauer (T2) bestimmt;
- ein erster Zeitbereich (86), der um den ersten Zeitpunkt (t1, t5) angeordnet ist, wird dahingehend untersucht, ob die Amplitude des Zeitzeichensignals (89) den ursprünglichen Wert der Amplitude annimmt;
- nimmt die Amplitude im erster Zeitbereich (86) den ursprünglichen Wert an, dann wird dem Datenbit (83) der erste logische Wert zugewiesen.

7. Verfahren nach einem der Ansprüche 3 oder 6,
**dadurch gekennzeichnet,**
**dass** für den Fall, dass die Amplitude im erster Zeitbereich (86) nicht den ursprünglichen Wert annimmt, dem Datenbit (84) der zweite logische Wert zugewiesen wird.

8. Verfahren nach einem der Ansprüche 3 oder 6,
**dadurch gekennzeichnet,**
**dass** ein zweiter Zeitbereich (87), der um den dritten Zeitpunkt (t3) angeordnet ist, dahingehend untersucht wird, ob die Amplitude des Zeitzeichensignals (89) auf die ursprüngliche Amplitude ansteigt, wobei für den Fall, dass die Amplitude im zweiten Zeitbereich (87) ansteigt, dem Datenbit (84) der zweite logische Wert zugewiesen wird.

9. Verfahren nach einem der vorstehenden Ansprüche,
**dadurch gekennzeichnet,**
**dass** ein einziger durchgehender Zeitbereich (88) vorgesehen ist, der den ersten und den zweiten Zeitbereich (86, 87) umfasst.

10. Verfahren nach einem der vorstehenden Ansprüche,
**dadurch gekennzeichnet,**
**dass** das Zeitzeichensignal (89) jeweils lediglich innerhalb des ersten und/oder des zweiten und/oder des einzigen Zeitbereichs (86-88) auf Störungen im Zeitzeichensignal (89) hin untersucht wird und Störungen lediglich in diesen Bereichen beseitigt oder herausgefiltert werden.

11. Verfahren nach einem der vorstehenden Ansprüche,
**dadurch gekennzeichnet,**
**dass** eine Amplitude des Zeitzeichensignals (89) außerhalb des ersten und/oder des zweiten und/oder des einzigen Zeitbereichs (86-88) für die Bestimmung des Datenbits (83-85) nicht berücksichtigt wird.

12. Verfahren nach einem der vorstehenden Ansprüche,
**dadurch gekennzeichnet,**
**dass** die erste Dauer (T1) kleiner als die zweite Dauer (T2) ist.

13. Verfahren nach einem der vorstehenden Ansprüche,
**dadurch gekennzeichnet,**
**dass** eine Änderung der Amplitude des Zeitzeichensignals (89) eine Absenkung der Amplitude des Zeitzeichensignals (89) bezeichnet.

14. Verfahren nach einem der vorstehenden Ansprüche,
**dadurch gekennzeichnet,**
**dass** der erste Zeitpunkt (t0, t2, t4) den Beginn eines Zeitrahmens (80-82) bezeichnet.

15. Verfahren nach einem der vorstehenden Ansprüche,
**dadurch gekennzeichnet,**
**dass** der zweite und dritte Zeitpunkt (t1, t3, t5) ein jeweiliges Ende einer Änderung der Amplitude des Zeitzeichensignals (89) bestimmt.

16. Verfahren nach Anspruch 15,
**dadurch gekennzeichnet,**
**dass** sich der dritte Zeitpunkt (t3) zeitlich nach dem zweiten Zeitpunkt (t1, t5) bezogen auf einen jeweiligen Zeitrahmen (80-82) befindet.

17. Verfahren nach einem der vorstehenden Ansprüche,
**dadurch gekennzeichnet,**
**dass** der erste logische Wert eine logische Null und der zweite logische Wert eine logisch 1 bezeichnet.

18. Verfahren nach einem der vorstehenden Ansprüche,
**dadurch gekennzeichnet,**
**dass** der erste Zeitpunkt (t0, t2, t4) der Änderung durch Synchronisieren des Zeitzeichensignals (89) auf eine fest vorgegebene Zeitbasis (51) durchgeführt wird.

19. Verfahren nach einem der vorstehenden Ansprüche,
**dadurch gekennzeichnet,**
**dass** für den Fall, dass der Zeitrahmen (80-82) des Zeitzeichensignals (89) auf die vorgegebenen Zeitbasis (51) einsynchronisiert ist, ein Synchronisationssignal (56) erzeugt wird.

20. Verfahren nach einem der vorstehenden Ansprüche,
**dadurch gekennzeichnet,**
**dass** die fest vorgegebene Zeitbasis (51) aus einer Referenzfrequenz (42)1, zum Beispiel der Frequenz eines Uhrenquarzes, durch Herunterteilen ermittelt wird.

21. Verfahren nach einem der vorstehenden Ansprüche,
**dadurch gekennzeichnet,**
**dass** ein vollständiges Zeitzeichentelegramm aus 59 oder aus 60 Datenbits (83-85) besteht.

22. Verfahren nach einem der vorstehenden Ansprüche, **gekennzeichnet durch**
die Verfahrensschritte:
- beginnend mit einem ersten Datenbit des Datentelegramms werden die 59 bzw. 60 Datenbits nacheinander zwischengespeichert;
- alle 59 bzw. 60 Datenbits werden aus dem Zwischenspeicher (70) ausgelesen und in einem Pufferspeicher (48) bereitgestellt;
- die bereitgestellten Datenbits werden, insbesondere seriell, zu einer Recheneinheit übertragen;
- die Recheneinheit berechnet aus den ausgelesenen 59 bzw. 60 Datenbits die exakte Zeit und/oder das exakte Datum.

23. Empfängeranordnung (1) zum Empfang von Zeitinformationen enthaltenden Zeitzeichensignalen (3), insbesondere in einer Funkuhr, insbesondere mittels eines Verfahrens nach einem oder mehreren der Ansprüche 1 bis 22,
- mit mindestens einer Antenne (2) zum Aufnehmen der Zeitzeichensignale (3),
- mit einer Zeitinformationsentnahmeeinrichtung (30) zur Entnahme der in dem Zeitzeichensignal (3) enthaltenen Zeitinformation,
- mit einer Eingabe-/Ausgabeeinheit (32), die ausgangsseitig von der entnommenen Zeitinformation des Zeitzeichensignals (3) abgeleitete Ausgabesignale bereit stellt.

24. Empfängeranordnung nach Anspruch 23,
**dadurch gekennzeichnet,**
**dass** ein Zeitzeichensignal (3) aus einer Vielzahl von Zeitrahmen (80-82) konstanter Dauer besteht und die Zeitinformation im Zeitzeichensignal (3) bitweise vorliegt, wobei jeweils einem Zeitrahmen (80-82) zumindest ein Datenbit (83-85) zugeordnet ist.

25. Empfängeranordnung nach einem der Ansprüche 23 oder 24,
**dadurch gekennzeichnet,**
**dass** ein vollständiges Zeitzeichentelegramm aus 59 oder aus 60 Datenbits (83-85) besteht, wobei ein Datenbit (83-85) durch eine Änderung, insbesondere durch eine Absenkung der Amplitude des Zeitzeichensignals (89) gebildet ist und der Wert des Datenbits (83-85) sich aus der Dauer (T1, T2) der Änderung ergibt.

26. Empfängeranordnung nach einem der Ansprüche 23 und 25,
**dadurch gekennzeichnet,**
**dass** eine Biterkennungsschaltung (45, 46) vorgesehen ist, der einem Datenbit entsprechend dem Protokoll des Zeitzeichentelegramms und der Dauer der Änderung einen logischen ersten Wert oder einen logischen zweiten Wert zuordnet.

27. Empfängeranordnung nach Anspruch 26,
**dadurch gekennzeichnet,**
**dass** die Biterkennungsschaltung (45, 46) einen Zeitgenerator (45) aufweist, welcher anhand einer festen Zeitbasis (51) und entsprechend dem Protokoll des Zeitzeichentelegramms eine erste Dauer (T1) der Änderung der Amplitude des Zeitzeichensignals, welche einer logische "O" entspricht, und eine zweite Dauer (T2), welche einer logische "1" entspricht, erzeugt.

28. Empfängeranordnung nach einem der Ansprüche 26 oder 27,
**dadurch gekennzeichnet,**
**dass** die Biterkennungsschaltung (45, 46) eine Schaltung zur Behandlung und Erkennung von Störungen im Zeitzeichensignal (3, 89) aufweist.

29. Empfängeranordnung nach einem der Ansprüche 26 bis 28,
**dadurch gekennzeichnet, dass** eine Synchronisationseinrichtung (43) vorgesehen ist, welche die Biterkennungsschaltung (45, 46) anhand einer festen Zeitbasis (51) auf den Beginn (t0, t2, t4) und/oder das Ende eines Zeitrahmens (80-82) des Zeitzeichensignals (3, 89) synchronisiert.

30. Empfängeranordnung nach Anspruch 29,
**dadurch gekennzeichnet,**
**dass** die Synchronisationseinrichtung (43) enthält:
- einen Zähler (52), welcher gesteuert durch eine Referenzfrequenz seinen Zählerstand (55) hochzählt,
- einen Vergleicher (53), der den Zählerstand (55) des Zählers (52) mit einem vorgegebenen Wert, der insbesondere der Dauer (T3) des Zeitrahmens entspricht, vergleicht,
- eine Rücksetzeinheit (54), welche den Zähler (52) bei Übereinstimmung des Zählerstandes (55) mit dem vorgegebenen Wert oder bei einem neuen Zeitzeichensignal (29) zurücksetzt,
- eine Ausgabeeinheit (53), welche ein Synchronisiersignal (56) zur Ansteuerung des Biterkennungssteuerung (45, 46) erzeugt, wenn der Zählerstand (55) des Zählers (52) mit dem vorgegebenen Wert übereinstimmt.

31. Empfängeranordnung nach einem der Ansprüche 23 bis 30,
**dadurch gekennzeichnet,**
**dass** ein Referenzeinrichtung (44) vorgesehen ist, die aus einer Referenzfrequenz (42), insbesondere der Frequenz eines Uhrenquarzes, mittels eines Teilers die feste Zeitbasis (51) bereit stellt.

32. Empfängeranordnung nach einem der Ansprüche 23 bis 31,
**dadurch gekennzeichnet,**
**dass** eine Speichereinrichtung vorgesehen ist, in der die Zeitinformation, insbesondere die Datenbits, in der Reihenfolge des Protokolls für das Zeitzeichentelegramm zwischengespeichert sind.

33. Empfängeranordnung nach einem der Ansprüche 23 bis 32,
**dadurch gekennzeichnet,**
**dass** der Speicherplatz der Speichereinrichtung (70) so ausgelegt ist, dass zumindest die Zeitinformationen, welche für ein vollständiges Zeitzeichentelegramm eines Zeitzeichensignals (3, 89) erforderlich sind, dort ablegbar sind.

34. Empfängeranordnung nach einem der Ansprüche 32 bis 33,
**dadurch gekennzeichnet,**
**dass** eine Ausgangs-Schiebe-Register (48) vorgesehen ist, deren serielle Ausgangsanschlüsse (49) mit den Ausgangsanschlüssen (49) der Empfängeranordnung (1) verbunden sind, in welchem bei Bedarf die Dateninhalte der Speichereinrichtung (70) ablegbar sind und über welches diese Dateninhalte über die Ausgangsanschlüsse (49) auslesbar sind.

35. Empfängeranordnung nach einem der Ansprüche 23 bis 34,
**dadurch gekennzeichnet,**
**dass** als Antenne (2) eine Ferritantenne vorgesehen ist, welche auf die Frequenz des von dem Zeitzeichensender gesendeten Zeitzeichensignal (3) abgestimmt ist.

36. Empfängeranordnung nach einem der Ansprüche 23 bis 35,
**dadurch gekennzeichnet,**
**dass** das Zeitzeichensignal (3) eine Radiowelle ist, die als Zeitinformation eine Reihe von Zeiteinheiten wie Tag, Stunde, Minute, Sekunde, etc. sowie Pauseninformationen zwischen jedem Paar benachbarter Zeiteinheiten repräsentiert.

37. Empfängeranordnung nach einem der Ansprüche 23 bis 36,
**dadurch gekennzeichnet,**
**dass** die Empfängeranordnung (1) zum Empfang eines von dem Zeitzeichensender DCF-77 gesendeten Zeitzeichensignals (3) ausgelegt ist.

38. Empfängeranordnung nach einem der Ansprüche 23 bis 37,
**dadurch gekennzeichnet,**
**dass** die Empfängeranordnung (1) einen Geradeaus-Empfänger aufweist oder Bestandteil eines Geradeaus-Empfänger ist.

39. Empfängeranordnung nach einem der Ansprüche 23 bis 38 ,
**dadurch gekennzeichnet,**
**dass** eine integrierte Schaltung (20) vorgesehen ist, die mindestens einen Eingangsverstärker (4), eine Filterstufe (6) und einen Gleichrichter (8) aufweist.

40. Funkuhr (100)
- mit mindestens einer Antenne (2) zum Aufnehmen der Zeitzeichensignale (3),
- mit einer integrierten Schaltung (20) mit einem Eingangsverstärker (4), einer Filterstufe (6) und einem Gleichrichter (8),
- mit einer Zeitinformationsentnahmeeinrichtung (30) zur Entnahme der in dem Zeitzeichensignal (3) enthaltenen Zeitinformation,
- mit einer Eingabe-/Ausgabeeinheit (32), an der von der entnommenen Zeitinformation des Zeitzeichensignals (3) abgeleitete Ausgabesignale abgreifbar sind,
- mit einer programmgesteuerten Einrichtung (102), insbesondere ein Mikroprozessor oder ein Mikrocontroller, welcher die die Zeitinformation enthaltenden Ausgangssignale zuführbar sind und welche daraus ein Uhrzeits- und Datumssignal (105) errechnet,
- mit einer autonomen Uhr (103) mit einer Anzeigeeinrichtung (106) zur Anzeige der Zeit und/oder des Datums, welche aus dem Uhrzeits- und Datumssignal (105) eine Korrektur des Datums und/oder der Uhrzeit vomimmt.

41. Funkuhr nach Anspruch 40,
**dadurch gekennzeichnet,**
**dass** eine Empfängeranordnung (1) zum Empfang von Zeitzeichensignalen (3) nach einem der Ansprüche 13 bis 28 vorgesehen ist.

42. Verwendung eines Empfängers (1) für eine Funkuhr (100) zum Gewinnen und Auswerten von Zeitinformationen aus einem gesendeten Zeitzeichensignal (3).
